# EUROPEAN PATENT APPLICATION

(11) **EP 4 549 399 A1**
(43) Date of publication of application: **07.05.2025**
(21) Application number: 24209009.0
(22) Date of filing: 25.10.2024
(51) Int. Cl.: C01G 53/50

(54) **POSITIVE ELECTRODE ACTIVE MATERIAL, PREPARATION METHOD THEREOF, POSITIVE ELECTRODE, AND RECHARGEABLE LITHIUM BATTERIES**

(30) Priority: 31.10.2023 KR 20230148299
(71) Applicant: SAMSUNG SDI CO., LTD., Yongin-si, Gyeonggi-do 17084 (KR)
(72) Inventor: KANG, Seok Mun, 17084 Yongin-si (KR); JUN, Dowook, 17084 Yongin-si (KR); KIM, Young-Ki, 17084 Yongin-si (KR); KONG, Youngsun, 17084 Yongin-si (KR); DOO, Sungwook, 17084 Yongin-si (KR); CHOO, Sung Ho, 17084 Yongin-si (KR); YOON, Jaesang, 17084 Yongin-si (KR); KANG, Gwiwoon, 17084 Yongin-si (KR); KANG, Byungwuk, 17084 Yongin-si (KR); JEONG, Jaeyong, 17084 Yongin-si (KR)
(74) Representative: Marks & Clerk LLP

(57) **Abstract**

A positive electrode active material includes a plurality of core particles including a layered lithium nickel-manganese-based composite oxide having a nickel content (e.g., amount) of greater than or equal to about 60 mol% based on 100 mol% of a total metal composition of the lithium nickel-manganese-based composite oxide excluding lithium, and a coating layer located on the surface of the core particle and containing Al and Ti. Also disclosed are a method of preparing the positive electrode active material, and a positive electrode and rechargeable lithium battery including the same.

## Description

### BACKGROUND OF THE INVENTION

### 1. Field

One or more aspects of embodiments of the present disclosure are directed toward positive electrode active materials, preparation methods thereof, positive electrodes including the positive electrode active materials, and rechargeable lithium batteries including the positive electrodes.

### 2. Description of the Related Art

A rechargeable lithium battery having relatively high energy density and easy portability may be used as a driving power source for a portable information device such as a cell phone, a laptop, smart phone, and/or the like, as a driving power source for hybrid or electric vehicles (automotive battery), and/or as a power storage power source for energy storage systems (ESS) or power walls. Recently, research has been actively conducted to use a rechargeable lithium battery with relatively high energy density as the driving power source for the hybrid and/or electric vehicles and/or as the power storage power source.

Various positive electrode active materials have been investigated to realize rechargeable lithium batteries having desired characteristics for application to the desired uses. Among them, lithium nickel-based oxide, lithium nickel manganese cobalt composite oxide, lithium nickel cobalt aluminium composite oxide, and/or lithium cobalt oxide may be used as positive electrode active materials. However, while demands for large-sized, high-capacity, and/or high-energy-density rechargeable lithium batteries have recently increased significantly, the supply of positive electrode active materials containing cobalt, a rare metal, is expected to be severely insufficient (short supply). For example, because cobalt is expensive and there are not many remaining reserves, there is a need or desire to develop suitable positive electrode active materials that exclude cobalt or reduce its content (e.g., amount).

### SUMMARY

One or more aspects of embodiments of the present disclosure are directed toward a positive electrode active material including lithium nickel-manganese-based composite oxide including an optimal or desire coating layer to improve the performance of rechargeable lithium batteries at high temperature and high voltage, capacity characteristics, initial charge/discharge efficiency, and/or high-temperature cycle-life characteristics.

In some embodiments, a positive electrode active material includes core particles including a layered lithium nickel-manganese-based composite oxide having a nickel content (e.g., amount) of greater than or equal to about 60 mol% based on 100 mol% of a total metal excluding lithium in the layered lithium nickel-manganese-based composite oxide, and a coating layer located on the surface of each of the plurality of the core particle and containing aluminium (Al) and titanium (Ti).

In some embodiments, a method of preparing a positive electrode active material includes (i) preparing a plurality of core particles including a layered lithium nickel-manganese-based composite oxide having a nickel content (e.g., amount) of greater than or equal to about 60 mol% based on 100 mol% of a total metal excluding lithium in the layered lithium nickel-manganese-based composite oxide, (ii) adding and mixing an aluminium raw material and a titanium raw material to an aqueous solvent to prepare a coating solution, (iii) adding and mixing the plurality of core particles to the coating solution to prepare a mixed solution, and (iv) removing the aqueous solvent from the mixed solution, drying the resulting product, and performing heat treatment to obtain a positive electrode active material.

In some embodiments, a positive electrode includes a positive electrode current collector and a positive electrode active material layer on the positive electrode current collector, wherein the positive electrode active material layer includes the positive electrode active material of the present embodiments.

Some embodiments provide a rechargeable lithium battery including the positive electrode, a negative electrode, and an electrolyte.

At least some of the above and other features of the invention are set out in the claims.

The positive electrode active material according to some embodiments may maximize or increase capacity, while minimizing or reducing production cost, may ensure or improve long cycle-life characteristics and improve high-voltage characteristics and high-temperature characteristics. If (e.g., when) the positive electrode active material is applied to a rechargeable lithium battery, relatively high initial charge/discharge capacity and efficiency may be achieved under high-voltage operating conditions, and long cycle-life characteristics may be realized under high-voltage and high-temperature conditions.

### BRIEF DESCRIPTION OF THE DRAWINGS

FIGs. 1-4 are schematic diagrams each showing a rechargeable lithium battery according to some embodiments.
FIG. 5 is a scanning electron microscope (SEM) image of the surface of the coated product prepared in Example 1.
FIG. 6 is an EDS (Energy-Dispersive X-Ray Spectroscopy) analysis image highlighting an Al element in FIG. 5.
FIG. 7 is an EDS analysis image highlighting a Ti element in FIG. 5.
FIG. 8 is an SEM image of the surface of the coated product of Example 1.
FIG. 9 is an EDS analysis image highlighting an Al element in the white square area of FIG. 8.
FIG. 10 is an EDS analysis image highlighting a Ti element in the white square area of FIG. 8.
FIG. 11 is an EDS analysis graph for Area 2 shown in FIGs. 8-10.
FIGs. 12 and 13 are SEM images of the surface of the final positive electrode active material prepared in Example 1.
FIGs. 14 and 15 are SEM images of the surface of the final positive electrode active material prepared in Comparative Example 1.
FIG. 16 is a graph showing the results of X-ray photoelectron spectroscopy (XPS) on the surface of the final positive electrode active material of Example 1, showing an enlarged peak at the position exhibiting Al.
FIG. 17 is a graph showing the results of XPS analysis of the surface of the final positive electrode active material of Example 1, showing an enlarged peak at the position exhibiting Ti.
FIG. 18 is an XPS depth profile analysis graph for the final positive electrode active material of Example 1.
FIG. 19 is a graph separately showing only the profile of the Al element and the profile of the Ti element in FIG. 18.

### DETAILED DESCRIPTION

Hereinafter, example embodiments will be described in more detail so that those of ordinary skill in the art can easily implement them. However, this disclosure may be embodied in many different forms and is not construed as limited to the example embodiments set forth herein.

The terminology used herein is used to describe embodiments only, and is not intended to limit the present disclosure. The singular expression includes the plural expression unless the context clearly dictates otherwise.

As used herein, "combination thereof" refers to a mixture, a stack, a composite, a copolymer, an alloy, a blend, a reaction product, and/or the like of the constituents.

Herein, it should be understood that terms such as "comprises," "includes," or "have" are intended to designate the presence of an embodied feature, number, step (e.g., act or task), element, or a combination thereof, but it does not preclude the possibility of the presence or addition of one or more other features, numbers, steps (e.g., act or task), elements, or a combination thereof.

In the drawings, the thickness of layers, films, panels, regions, etc., are exaggerated for clarity and like reference numerals designate like elements throughout, and duplicative descriptions thereof may not be provided in the specification. It will be understood that if (e.g., when) an element such as a layer, film, region, or substrate is referred to as being "on" another element, it can be directly on the other element or intervening elements may also be present. In contrast, if (e.g., when) an element is referred to as being "directly on" another element, there are no intervening elements present.

In one or more embodiments, "layer" herein includes not only a shape formed on the whole surface if (e.g., when) viewed from a plan view, but also a shape formed on a partial surface.

The average particle diameter may be measured by any suitable method in the art, for example, by a particle size analyzer, by a transmission electron microscope image and/or a scanning electron microscope image. In one or more embodiments, it is possible to obtain an average particle diameter value by using a dynamic light scattering method (e.g., by using a measuring device with dynamic light scattering), performing data analysis, counting the number of particles for each particle size range, and calculating from this. Unless otherwise defined, the average particle diameter may refer to the diameter (D₅₀) of particles having a cumulative volume of 50 volume% in the particle size distribution. As used herein, if (e.g., when) a definition is not otherwise provided, the average particle diameter refers to a diameter (D₅₀) of particles having a cumulative volume of 50 volume% in the particle size distribution that is obtained by measuring the size (diameter for spherical particles or major axis length for non-spherical particles) of about 20 particles at random in a scanning electron microscope image.

Herein, "or" is not to be construed as an exclusive meaning, for example, "A or B" is construed to include A, B, A+B, and/or the like. Further, as used herein, expressions such as "at least one of", "one of", and "selected from", when preceding a list of elements, modify the entire list of elements and do not modify the individual elements of the list. For example, "at least one selected from among a, b and c", "at least one of a, b or c", and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

As used herein, the term "and/or" includes any and all combinations of one or more of the associated listed items.

Further, the use of "may" when describing embodiments of the present disclosure refers to "one or more embodiments of the present disclosure".

"Metal" is interpreted as a concept including ordinary metals, transition metals and metalloids (semi-metals).

As used herein, the terms "use," "using," and "used" may be considered synonymous with the terms "utilize," "utilizing," and "utilized," respectively.

Spatially relative terms, such as "beneath," "below," "lower," "above," "upper," "bottom," "top" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

As used herein, the terms "substantially", "about", and similar terms are used as terms of approximation and not as terms of degree, and are intended to account for the inherent deviations in measured or calculated values that would be recognized by those of ordinary skill in the art. "About" or "approximately," as used herein, are inclusive of the stated value and mean within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

The battery management system and/or any other relevant devices or components according to embodiments of the present disclosure described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

### Positive Electrode Active Material

In some embodiments, a positive electrode active material includes a plurality of core particles including a layered lithium nickel-manganese-based composite oxide having a nickel content (e.g., amount) of greater than or equal to about 60 mol% based on 100 mol% of a total metal excluding lithium in the layered lithium nickel-manganese-based composite oxide, and a coating layer located on the surface of each of the plurality of the core particle and containing Al and Ti.

As the price of cobalt, a rare metal, has recently significantly increased, there is a demand (or desire in the field) for the development of positive electrode active materials that exclude cobalt or reduce its content (e.g., amount). Among these, a positive electrode active material having an olivine crystal structure such as lithium iron phosphate (LFP), lithium manganese phosphate (LMP), lithium manganese iron phosphate (LMFP), and/or the like, or a spinel crystal structure such as lithium manganese oxide (LMO) and/or the like, has a limitation in realizing suitably high capacity due to a small (e.g., low) available lithium amount within the structure. The layered lithium nickel-manganese positive electrode active material has excellent or suitable capacity and efficiency characteristics due to the suitably high available lithium capacity in the structure, making it suitable as a material for high-capacity batteries. However, as cobalt, which plays a key role in the layered structure, is removed, structural stability decreases, resistance increases, and it becomes difficult to secure long cycle-life characteristics. In addition, the layered lithium nickel-manganese positive electrode active material, from which cobalt is excluded, may have a problem of accelerated side reaction with an electrolyte under high-voltage and high-temperature conditions, thus resulting in increased amount of gas generation and deteriorated cycle-life characteristics.

In an effort to improve the surface stability of the layered lithium nickel-manganese-based positive electrode active material in the high voltage region, a method of improving the cycle-life characteristics by coating the positive electrode active material with elements such as Al may be considered. However, because these coating elements use electrochemically inactive non-transition metal elements, resistance may increase and charge/discharge efficiency may be lower than before coating. In some embodiments, a coating layer including both (e.g., simultaneously) Al and Ti is introduced onto the surface of a layered lithium nickel-manganese-based positive electrode active material, thereby strengthening the particle surface and forming a coating layer with a structural 3D lithium channel, thereby improving cycle-life characteristics under high-voltage, high-temperature operation conditions and initial charging and discharging efficiency.

### Core Particles

The core particles include layered lithium nickel-manganese-based composite oxide. A nickel content (e.g., amount) is greater than or equal to about 60 mol%, for example, about 60 mol% to about 80 mol%, about 65 mol% to about 80 mol%, about 70 mol% to about 80 mol%, about 60 mol% to about 79 mol%, about 60 mol% to about 78 mol%, or about 60 mol% to about 75 mol%, based on 100 mol% of a total metal excluding lithium in the layered lithium nickel-manganese-based composite oxide. If the nickel content (e.g., amount) satisfies any of the above ranges, suitably high capacity may be achieved and structural stability may be increased even if the cobalt content (e.g., amount) is reduced.

A manganese content (e.g., amount) may be, for example, greater than or equal to about 10 mol%, for example, about 10 mol% to about 40 mol%, about 15 mol% to about 35 mol%, about 15 mol% to about 30 mol%, or about 20 mol% to about 30% based on 100 mol% of a total metal excluding lithium in the layered lithium nickel-manganese-based composite oxide. If the manganese content (e.g., amount) satisfies any of the above ranges, the positive electrode active material may improve structural stability while realizing suitably high capacity.

The layered lithium nickel-manganese-based composite oxide may be a layered lithium nickel-manganese-aluminium-based composite oxide that further includes aluminium, in addition to nickel and manganese. If the composite oxide contains aluminium, it is advantageous to maintain a suitably or substantially stable layered structure even if the cobalt element is excluded from the structure. An aluminium content (e.g., amount) based on 100 mol% excluding lithium in the lithium nickel-manganese-based composite oxide may be greater than about 0, greater than or equal to about 0.1 mol%, greater than or equal to about 0.5 mol%, or greater than or equal to about 1 mol%, for example, greater than about 0 and less or equal to about 3 mol%, about 1 mol% to about 3 mol%, about 1 mol% to about 2.5 mol%, about 1 mol% to about 2 mol%, or about 1.5 mol% to about 2.5 mol%. If the aluminium content (e.g., amount) satisfies any of the above ranges, a suitably or substantially stable layered structure may be maintained even if cobalt is excluded, the problem of structure collapse due to charging and discharging may be suppressed or reduced, and long cycle-life characteristics of the positive electrode active material may be realized.

According to some embodiments, the concentration of aluminium within the core particle may be substantially uniform. For example, there may be no concentration gradient of aluminium from the center to the surface within the core particle, or the aluminium concentration in the external portion of the core particle may be neither higher nor lower than in the internal portion, and the aluminium within the core particle may be evenly (or substantially evenly) distributed. Such structure may be obtained by using an aluminium raw material during precursor production without additional doping of aluminium during the synthesis of the core particles, thereby synthesizing a composite oxide using a nickel-manganese-aluminium-based hydroxide as a precursor. The core particles may be in a form of a secondary particle in which a plurality of primary particles are agglomerated, and the aluminium content (e.g., amount) inside the primary particle may be the same or similar regardless of the location of the primary particle. For example, if a primary particle is selected at a random position in the cross-section of a secondary particle and the aluminium content (e.g., amount) is measured inside the primary particle rather than at its interface, regardless of the location of the primary particle, for example, whether the primary particle is close to the center of the secondary particle or close to the surface, the aluminium content (e.g., amount) may be the same/similar/substantially uniform. In this structure, a suitably stable layered structure can be maintained even if cobalt is absent or is present in a very small (e.g., significantly or substantially reduced) amount, and aluminium by-products and/or aluminium aggregates are not generated, so that the capacity, efficiency, and cycle-life characteristics of the positive electrode active material can be improved at the same time (e.g., concurrently).

The layered lithium nickel-manganese-based composite oxide may be represented by Chemical Formula 1.

Chemical Formula 1 Liₐ₁Niₓ₁Mn_{y1}Al_{z1}M¹_{w1}O_{2-b1}X_{b1}.

In Chemical Formula 1, 0.9≤a1≤1.8, 0.6≤x1≤0.8, 0.1≤y1≤0.4, 0≤z1≤0.03, 0≤w1≤0.3, 0.9≤x1+y1+z1+w1≤1.1, and 0≤b1≤0.1, M¹ is one or more elements selected from among B, Ba, Ca, Ce, Cr, Fe, Mg, Mo, Nb, Si, Sn, Sr, Ti, V, W, Y, and Zr, and X is one or more elements selected from among F, P, and S.

In Chemical Formula 1, for example, 0.9≤a1≤1.5, or 0.9≤a1≤1.2. In some embodiments, Chemical Formula 1 may contain aluminium, in which case 0.6≤x1≤0.8, 0.1≤y1≤0.39, 0.01≤z1≤0.03, and 0≤w1≤0.29 may be satisfied, or, for example, 0.6≤x1≤0.8, 0.1≤y1≤0.39, 0.01<z1≤0.03, and 0≤w1≤0.29 may be satisfied.

In Chemical Formula 1, for example, 0.6≤x1≤0.79, 0.6≤x1≤0.78, 0.6≤x1≤0.75, 0.65≤x1≤0.8, or 0.7≤x1≤0.79; 0.1≤y1≤0.35, 0.1≤y1≤0.30, 0.1≤y1≤0.29, 0.15≤y1≤0.39, or 0.2≤y1≤0.3; 0.01≤z1≤0.025, 0.01<z1≤0.02, or 0.01<z1≤0.019; and 0≤w1≤0.28, 0≤w1≤0.27, 0≤w1≤0.26, 0≤w1≤0.25, 0≤w1≤0.24, 0≤w1≤0.23, 0≤w1≤0.22, 0≤w1≤0.21, 0≤w1≤0.2, 0≤w1≤0.15, 0≤w1≤0.1, or 0≤w1≤0.09.

For example, the layered lithium nickel-manganese-based composite oxide may not contain cobalt or may contain a small amount of cobalt and the cobalt content (e.g., amount) may be about 0 mol% to about 0.01 mol% based on 100 mol% of a total metal excluding lithium in the layered lithium nickel-manganese-based composite oxide.

The core particles may be in the form of secondary particles made by agglomerating a plurality of primary particles. The secondary particles may be spherical, elliptical, polyhedral, and/or irregular in shape and the primary particles may be spherical, elliptical, plate-shaped, or a combination thereof.

The core particle is susceptible to chemical attacks from components in an electrolyte, if (e.g., when) a battery is operated under high-voltage or high-temperature conditions, and thus may have many side reactions with the electrolyte, resulting in an increased amount of gas generation and thereby, deteriorated battery cycle-life and safety. However, these problems may be solved by introducing thereto a coating layer according to the present embodiments which will be described in more detail herein below.

### Coating Layer

The positive electrode active material according to some embodiments includes a coating layer located on the surface of the core particle and containing Al and Ti.

The Al content (e.g., amount) may be about 5 at% to about 35 at%, for example, about 5 at% to about 30 at%, about 5 at% to about 25 at%, about 5 at% to about 20 at%, or about 10 at% to about 20 at% based on 100 at% of a total element on the surface of the positive electrode active material, as measured through X-ray photoelectron spectroscopy (XPS). In some embodiments, the Ti content (e.g., amount) may be about 0.1 at% to about 3.0 at%, for example, about 0.3 at% to about 2.5 at%, or about 0.5 at% to about 2.0 at% based on 100 at% of a total element of the surface of the positive electrode active material, as measured through XPS.

The total elements may be, for example, Li, Ni, Mn, Al, Ti, O, and C. Herein, the Al and Ti contents on the surface may be measured through XPS depth profile analysis. If the Al and Ti contents on the surface of the positive electrode active material satisfy any of the above respective ranges, the initial charge/discharge capacity, initial charge/discharge efficiency, and cycle-life characteristics at high temperature and high voltage of a rechargeable lithium battery using the positive electrode active material may be improved at the same time (e.g., concurrently).

In some embodiments, the Al content (e.g., amount) of the coating layer may be about 0.1 mol% to about 3.0 mol%, for example, about 0.1 mol% to about 2.0 mol%, about 0.5 mol% to about 1.5 mol%, or about 0.7 mol% to about 1.3 mol% based on 100 mol% of a total metal excluding lithium in the positive electrode active material. The Al content (e.g., amount) of the coating layer refers to the Al content (e.g., amount) alone contained in the coating layer, regardless of the Al contained in the core particles. The total metal excluding lithium in the positive electrode active material, which is a reference for the above content (e.g., amount) range, refers to the content (e.g., amount) of all metals (excluding lithium) present in the entire positive electrode active material particles, not components on the surface of the positive electrode active material.

In some embodiments, the Ti content (e.g., amount) of the coating layer may be about 0.01 mol% to about 1.5 mol%, for example, about 0.05 mol% to about 1.0 mol%, about 0.1 mol% to about 1.0 mol%, about 0.1 mol% to about 0.5 mol%, or about 0.1 mol% to about 0.4 mol% based on 100 mol% of a total metal excluding lithium in the positive electrode active material.

A total amount of Al and Ti in the coating layer may be about 0.11 mol% to about 4.5 mol%, for example, about 0.5 mol% to about 1.5 mol%, based on 100 mol% of a total metal excluding lithium in the positive electrode active material. This may refer to the Al and Ti contents alone included in the coating layer, regardless of the Al and Ti that are included or may be included in the core particles.

The Al and Ti contents in the coating layer of the total positive electrode active material may be measured, for example, through SEM-EDS analysis of the surface or cross-section of the positive electrode active material. Therefore, "on the surface of the positive electrode active material, a ratio (Al/Ti) of Al content (e.g., amount) to Ti content (e.g., amount) may be greater than or equal to about 2" can be understood as "a ratio (Al/Ti) of Al content (e.g., amount) of the coating layer to Ti content (e.g., amount) of the coating layer may be greater than or equal to about 2. If the Al and Ti contents in the coating layer satisfy their respective ranges, the coating layer may have a substantially uniform and thin thickness, which may not increase (e.g., may not undesirably increase) resistance of the positive electrode active material and effectively or suitably suppress or reduce a side reaction with the electrolyte and thereby, improve cycle-life characteristics of a rechargeable lithium battery under high-voltage and high-temperature conditions. For example, if the Al and Ti contents of the coating layer are excessive (e.g., outside of the recited ranges), a suitably uniform coating layer may not be formed and/or resistance may increase, which may reduce charge/discharge efficiency and cycle-life characteristics, and if the aluminium content (e.g., amount) of the coating layer is too small (e.g., outside of the recited ranges), a coating layer of an appropriate or suitable thickness may not be formed and an effect of suppressing or reducing side reactions with the electrolyte may be reduced.

On the surface of the positive electrode active material, a ratio (Al/Ti) of Al content (e.g., amount) to Ti content (e.g., amount) may satisfy (e.g., may be) greater than or equal to about 2, for example, about 2 to about 50, about 2 to about 40, about 2 to about 30, about 2 to about 20, about 2 to about 10, or about 3 to about 7. If any of the above ratios are satisfied, the initial charge/discharge capacity, initial charge/discharge efficiency, and cycle-life characteristics at high temperature and high voltage of the rechargeable lithium battery may be improved at the same time (e.g., concurrently).

The coating layer according to some embodiments may be in the form of a film that continuously surrounds the surface of the core particle, or may be in the form of a shell that surrounds the entire surface of the core particle. This is distinct from a structure in which only a portion of the surface of the core particle is partially coated. According to some embodiments, the coating layer may be formed to entirely cover (or encapsulate) the surface of the core particle and may be formed to be very (or suitably or substantially) thin and substantially uniform in thickness, and therefore the positive electrode active material does not increase resistance or decrease capacity, improves structural stability, effectively or suitably or substantially suppresses or reduces side reactions with electrolytes, reduces the amount of gas generated under high-voltage and high-temperature conditions, and achieves long cycle-life characteristics.

Within the coating layer, Al and Ti may be mixed together, and Ti may be distributed in part or all of the area where Al is distributed.

The coating layer may have a thickness of about 5 nm to about 200 nm, for example, about 5 nm to about 150 nm, about 5 nm to about 100 nm, about 5 nm to about 80 nm, about 5 nm to about 50 nm, or about 10 nm to about 50 nm. If the coating layer satisfies the thickness range, the structural stability of the positive electrode active material may be improved without increasing (e.g., undesirably increasing) resistance or reducing (e.g., undesirably reducing) capacity due to the coating, and the side reaction with the electrolyte may be effectively or suitably suppressed or reduced. The thickness of the coating layer may be measured through, for example, SEM, transmission electron microscopy (TEM), Time-of-Flight Secondary Ion Mass Spectrometry (TOF-SIMS), XPS, and/or EDS analysis, and, for example, may be measured through EDS line profile analysis of the cross-section of the positive electrode active material.

The coating layer according to some embodiments is characterized by being suitably thin and substantially uniform in thickness, in a range of tens to hundreds of nanometers. For example, the deviation in coating layer thickness in one positive electrode active material particle may be less than or equal to about 20%, less than or equal to about 18%, or less than or equal to about 15%. Herein, the deviation in coating layer thickness refers to the coating layer thickness within one positive electrode active material particle. For example, the deviation of the coating layer thickness may be calculated by measuring the thickness of about 10 points in an electron microscope image of the cross-section of a single positive electrode active material particle to calculate an arithmetic average, and then dividing the absolute value of the difference between one data point and the arithmetic mean value by the arithmetic mean value and then multiplying by 100%. If the deviation and/or standard deviation of the coating layer thickness satisfies the above range, then a coating layer of substantially or suitably uniform thickness may be formed in a form of a good or suitable film on the surface of the positive electrode active material particle. Accordingly, the structural stability of the positive electrode active material is improved, side reactions with the electrolyte may be effectively or suitably suppressed or reduced, and the undesirable increase in resistance or decrease in capacity due to coating may be minimized or reduced.

The coating layer may include, for example, a layered aluminium compound, aluminium oxide, lithium-aluminium oxide, LiAlO₂, or a combination thereof.

In some embodiments, the coating layer may include a titanium compound, for example, titanium oxide, lithium-titanium oxide, or a combination thereof, and for example, Li₂TiO₃. The titanium compound may have a 3D lithium channel, thereby further improving the charging and discharging efficiency of rechargeable lithium batteries.

The coating layer may further contain nickel, manganese, or a combination thereof, in addition to aluminium and titanium. An average particle diameter (D₅₀) of the positive electrode active material in a form of particles (i.e., form of positive electrode active material particles, the positive electrode active material particles including the core particles and the coating layer on the surface of each of the core particles) according to some embodiments is not particularly limited, but may be, for example, (i.e., the average diameter of the particles may be) about 1 µm to about 25 µm, about 5 µm to about 25 µm, about 10 µm to about 25 µm, about 11 µm to about 20 µm, or about 12 µm to about 18 µm. As used herein, if (e.g., when) a definition is not otherwise provided, the average particle diameter refers to a diameter (D₅₀) of particles having a cumulative volume of 50 volume% in the particle size distribution that is obtained by measuring the size (diameter or major axis length) of about 20 particles at random in a scanning electron microscope image for positive electrode active materials. If the average particle diameter of the positive electrode active material satisfies any of the above ranges, suitably high capacity and suitably long cycle-life can be realized and it can be advantageous to form a coating layer according to some embodiments.

In some embodiments, the positive electrode active material may be characterized as not containing (e.g., excluding) sodium. In conventional methods, sodium ions can be used in the preparing process of a positive electrode active material, but according to the preparing method described in more detail herein below, core particles with a suitably stable structure and a coating layer of substantially uniform thickness can be formed without using sodium ions.

In one or more embodiments, the positive electrode active material according to some embodiments may contain a sulfur (S) component on the surface, which may be caused by (e.g., may come from) a coating raw material to be described in more detail herein below.

### Method of Preparing Positive Electrode Active Material

In some embodiments, a method of preparing a positive electrode active material includes (i) preparing a plurality of core particles including a layered lithium nickel-manganese-based composite oxide having a nickel content (e.g., amount) of greater than or equal to about 60 mol% based on 100 mol% of a total metal excluding lithium in the layered lithium nickel-manganese-based composite oxide, (ii) adding and mixing an aluminium raw material and a titanium raw material to an aqueous solvent to prepare a coating solution, (iii) adding and mixing the plurality of core particles to the coating solution to prepare a mixed solution, and (iv) removing the aqueous solvent from the mixed solution, drying the resulting product, and performing heat treatment to obtain a positive electrode active material. The positive electrode active material according to the present embodiments may be prepared through the method.

The layered lithium nickel-manganese-based composite oxide may be prepared, for example, by mixing a nickel-manganese-based composite hydroxide and a lithium raw material, and performing a first heat treatment. The nickel-manganese-based composite hydroxide may be a precursor of core particles and may be in the form of secondary particles in which a plurality of primary particles are agglomerated. The nickel-manganese-based composite hydroxide (or nickel-manganese-based composite hydroxide) may be prepared by a suitable coprecipitation method.

The content (e.g., amount) of nickel may satisfy a range of greater than or equal to about 60 mol% and may be, for example, about 60 mol% to about 80 mol%, about 65 mol% to about 80 mol%, about 70 mol% to about 80 mol%, about 60 mol% to about 79 mol%, about 60 mol% to about 78 mol%, or about 60 mol% to about 75 mol% based on 100 mol% of a total metal in the nickel-manganese-based composite hydroxide. When the nickel content (e.g., amount) satisfies any of the above ranges, suitably high capacity may be achieved and structural stability may be increased even if the cobalt content (e.g., amount) is reduced.

The content (e.g., amount) of manganese may be greater than or equal to about 15 mol%, for example, about 15 mol% to about 40 mol%, about 15 mol% to about 39 mol%, about 15 mol% to about 35 mol%, about 15 mol% to about 30 mol%, or about 20 mol% to about 30%, etc., based on 100 mol% of a total metal in the nickel-manganese-based composite hydroxide.

In one or more embodiments, if (e.g., when) the nickel-manganese-based composite hydroxide further contains aluminium, the aluminium content (e.g., amount) may be greater than or equal to about 0.1 mol%, greater than or equal to about 0.5 mol%, or greater than or equal to about 1 mol%, for example, about 1 mol% to about 3 mol%, about 1 mol% to about 2.5 mol%, about 1 mol% to about 2 mol%, or about 1 mol% to about 1.9 mol%, based on 100 mol% of a total metal in the nickel-manganese-based composite hydroxide. If the manganese and aluminium contents of the composite hydroxide satisfy any of their respective above ranges, suitably high capacity may be realized while structural stability of the positive electrode active material may be increased, and production price may be lowered to increase economic efficiency.

In a method for preparing a positive electrode active material according to some embodiments, in the preparation of core particles, aluminium is not additionally doped, but an aluminium raw material may be used to prepare a precursor, so that a nickel-manganese-aluminium-based composite hydroxide, in which aluminium is uniformly (e.g., substantially uniformly) dispersed in the structure, may be used as the precursor. When such a precursor is used, even in the absence of cobalt, the positive electrode active material may stably or suitably maintain a layered structure even after repeated charges and discharges, and undesirable aluminium byproducts and/or aluminium aggregates may not be formed, thus improving capacity and efficiency characteristics and cycle-life characteristics of the positive electrode active material.

The cobalt content (e.g., amount) in the nickel-manganese-based composite hydroxide may be less than or equal to about 0.01 mol%, less than or equal to about 0.005 mol%, or less than or equal to about 0.001 mol%, based on 100 mol% of a total metal in the nickel-manganese-based composite hydroxide. This nickel-manganese-based composite hydroxide may be economical as it avoids or reduces the increase in unit cost caused by the addition of cobalt (i.e., it uses substantially reduced cobalt or no cobalt), maximizes or increases capacity, and improves structural stability.

For example, the nickel-manganese-based composite hydroxide may be represented by Chemical Formula 2.

Chemical Formula 2 Niₓ₂Mn_{y2}Al_{z2}M²_{w2}(OH)₂.

In Chemical Formula 2, 0.6≤x2≤0.8, 0.1≤y2≤0.4 0≤z2≤0.03, 0≤w2≤0.3, and 0.9≤x2+y2+z2+w2≤1.1, and M² may be one or more elements selected from among B, Ba, Ca, Ce, Cr, Fe, Mg, Mo, Nb, Si, Sn, Sr, Ti, V, W, Y, and Zr.

In Chemical Formula 2, for example, 0.6≤x2≤0.8, 0.1≤y2≤0.39, 0.01≤z2≤0.03, and 0≤w2≤0.29.

The nickel-manganese-based composite hydroxide may be in a form of particles, and the average particle diameter (D₅₀) of the particles may be about 1 µm to about 25 µm, about 5 µm to about 20 µm, about 10 µm to about 20 µm, about 11 µm to about 18 µm, or about 12 µm to about 15 µm.

The nickel-manganese-based composite hydroxide and lithium raw material may be mixed in a molar ratio of about 1:0.9 to about 1:1.8, for example, about 1:0.9 to about 1:1.5, or about 1:0.9 to about 1:1.2. The first heat treatment may be performed under an oxygen atmosphere, for example, within a temperature range of about 750 °C to about 950 °C, about 780 °C to about 900 °C, or about 810 °C to about 890 °C, for about 2 hours to about 20 hours, or about 4 hours to about 12 hours. The layered lithium nickel-manganese-based composite oxide may be obtained through heat treatment. The obtained composite oxide is substantially the same as that described in connection with the core particles in the positive electrode active material of the present embodiments.

Because layered lithium nickel-manganese-based composite oxides have significantly different residual lithium contents on the particle surface and have different characteristics from oxides of other composition (e.g., lithium nickel-cobalt-manganese-based composite oxide, lithium nickel-cobalt-aluminum-based composite oxide, lithium cobalt-based oxide, and/or the like), it is impossible (or difficult) to form a satisfactory or suitable coating layer in the form of a substantially uniform film using a conventional coating method. In some embodiments, a method of coating the surface of a layered lithium nickel-manganese-based composite oxide particle with Al and Ti at a very (e.g., substantially) uniform thickness is provided.

In some embodiments, a coating solution is first prepared by adding an aluminium raw material and a titanium raw material to an aqueous solvent and mixing them, and then core particles are added to the coating solution and mixed. This is a salt-dissolution wet coating method and can be referred to as a pre-addition method in which the salt (e.g., aluminium salt and/or titanium salt), which is the coating raw material, is first completely dissolved and then the active material particles are added.

The aqueous solvent may include distilled water, alcohol-based solvent, or a combination thereof.

For example, the aluminium raw material may be aluminium sulfate. The aluminium sulfate may be an optimal or suitable raw material for forming a substantially uniform Al coating layer on the layered lithium nickel-manganese-based composite oxide.

The titanium raw material may be titanium sulfate, titanium nitrate, or a combination thereof.

The Al content (e.g., amount) in the aluminium raw material may be designed to be about 0.1 mol% to about 3.0 mol%, for example, about 0.1 mol% to about 2.0 mol%, about 0.5 mol% to about 1.5 mol%, about 0.6 mol% to about 1.4 mol%, about 0.7 mol% to about 1.3 mol%, or about 0.8 mol% to about 1.2 mol% based on 100 mol% of a total metal excluding lithium in the positive electrode active material that includes a total metal excluding lithium in the layered lithium nickel-manganese-based composite oxide, aluminium of the aluminium raw material, and titanium of the titanium raw material. If the Al coating content (e.g., amount) is designed within any of the above ranges, the coating layer may be formed to have a suitably thin thickness of several to hundreds of nanometers and substantially uniform thickness, thus reducing an amount of gas generated by rechargeable lithium batteries under high-voltage and/or high-temperature operation conditions and improving high-capacity and long cycle-life characteristics.

The Ti content (e.g., amount) in the titanium raw material may be designed to be about 0.01 mol% to about 1.5 mol%, for example, about 0.05 mol% to about 1.0 mol%, about 0.1 mol% to about 1.0 mol%, about 0.1 mol% to about 0.5 mol%, or about 0.1 mol% to about 0.4 mol% based on 100 mol% of a total metal excluding lithium in the positive electrode active material that includes a total metal excluding lithium in the layered lithium nickel-manganese-based composite oxide, aluminium of the aluminium raw material, and titanium of the titanium raw material. If the Ti coating content (e.g., amount) is designed within any of the above ranges, the coating layer may be formed to have a suitably thin thickness of several to hundreds of nanometers and a substantially uniform thickness, improving cycle-life characteristics under high-voltage and/or high-temperature operation conditions and increasing the initial charge and discharge efficiency.

The adding and mixing of the aluminium raw material and titanium raw material into an aqueous solvent may proceed for approximately about 1 minute to about 60 minutes, for example, about 1 minute to about 30 minutes, about 3 minutes to about 30 minutes, or about 5 minutes to about 10 minutes. In some embodiments, the mixing speed may be about 100 rpm to about 800 rpm, for example, about 200 rpm to about 600 rpm, or about 250 rpm to about 500 rpm. Under these conditions, the aluminium raw material and titanium raw material are completely or suitably dissolved in the aqueous solvent to obtain a colorless transparent coating solution, and this coating solution may be used to effectively or suitably form the substantially uniform coating layer according to some embodiments. The pH of the mixed coating solution may be, for example, about 1.5 to about 4, for example, about 2.0 to about 3.5, about 2.5 to about 3.3, about 2.7 to about 3.3, or about 2.9 to about 3.2.

In the adding of the core particles to the prepared coating solution, while stirring (i.e. mixing) the coating solution, the core particles are added thereto to increase coating quality.

In one or more embodiments, time taken to add the core particles to the coating solution may be about 30 seconds/about 500 g to about 2 minutes/about 500 g, for example, about 30 seconds/about 500 g to about 1.5 minutes/about 500 g, and/or the like. The speed of adding the core particles may be appropriately or suitably adjusted to control pH of a supernatant after completing the coating, inducing effective or suitable formation of the substantially uniform coating layer according to some embodiments. If the speed of adding core particles is too slow, the reaction rate for each particle may vary and a substantially uniform coating layer may not be formed. In some embodiments, if the speed at which core particles are added is too fast, the pH may change quickly (e.g., undesirably quickly) and a substantially uniform coating layer may not be formed.

After the core particles are all added to the coating solution, the stirring may be performed for about 15 minutes to about 60 minutes, for example, about 20 minutes to about 50 minutes, or about 30 minutes to about 45 minutes. Time taken from starting the addition of the core particles to the coating solution to completion of the stirring, i.e. coating reaction time, may be adjusted within about 1 hour.

In some embodiments, if (e.g., when) the adding and mixing of the core particles to the coating solution is stopped, for example, pH of the supernatant after completing the mixing may be in a range of about 5.5 to about 8.5. If the pH of the supernatant is less than 5.5, the acidity may become unsuitably strong and a substantially uniform coating layer may not be formed, and if the pH is more than 8.5, the alkalinity may become unsuitably strong, making it difficult to form a substantially uniform Al coating layer.

After removing the aqueous solvent from the mixed solution, a product therefrom may be for example, dried at about 40 °C to about 240 °C, about 100 °C to about 220 °C, or about 150 °C to about 200 °C and, for example, under a vacuum condition, and under these conditions a satisfactory or suitable coated product may be obtained.

The dried product after removing the aqueous solvent from the mixed solution may be referred to as a coated product. The coated product includes core particles and a coating layer located on the surface of the core particle and containing Al and Ti. For example, the coating layer containing Al and Ti may include a fiber shape (e.g., in a form of fibers), for example, a mesh shape and/or a spiderweb shape. Such a mesh may be continuously formed over the entire surface of the core particles. The mesh-shaped coating layer may surround the core particles with a very or suitably thin and substantially uniform thickness to strengthen the surface of the positive electrode active material and improve structural stability and thereby, enhance high-temperature and high-voltage characteristics.

After mixing the nickel-manganese-based composite hydroxide and the lithium raw material, the heat treatment of such mixture may be referred to as a primary (e.g. first) heat treatment, while the heat treatment of the coated product may be referred to as a secondary (e.g. second) heat treatment.

In some embodiments, the second heat treatment temperature range may be about 730 °C to about 800 °C, for example, about 740 °C to about 800 °C, about 750 °C to about 800 °C, about 750 °C to about 780 °C, or about 750 °C to about 775 °C. If the second heat treatment temperature is set to any of the above ranges, the tendency of aluminium to diffuse into the secondary particle may be reduced and it may mainly remain on the surface of the secondary particle and at the same time (e.g., concurrently), the surface of the secondary particle can be coated in the form of a very or suitably thin and substantially uniformly thick shell, and titanium can also be well or suitably coated on the surface of the secondary particle.

If the second heat treatment temperature exceeds about 800 °C, the tendency (e.g., concentration) of aluminium to diffuse into the secondary particles increases, making it difficult to form a high-concentration Al-rich coating layer on the surface, and accordingly, the initial charge/discharge capacity and efficiency characteristics at high voltage may be reduced, and cycle-life characteristics at high voltage and high temperature conditions may be reduced. If the second heat treatment temperature is less than about 730 °C, a portion of aluminium and/or titanium may be aggregated (e.g., agglomerated) and/or be distributed unevenly on the surface of the secondary particles, which may result in reduced cycle-life characteristics under high temperature and high voltage conditions and lower initial charge/discharge efficiency.

The second heat treatment may be performed, for example, in an oxygen atmosphere for about 2 to about 20 hours, or about 3 to about 10 hours.

The obtained positive electrode active material includes a plurality of core particles including a layered lithium nickel-manganese-based composite oxide having a nickel content (e.g., amount) of greater than or equal to about 60 mol% based on 100 mol% of a total metal excluding lithium in the layered lithium nickel-manganese-based composite oxide, and a coating layer located on the surface of the core particle and containing Al and Ti. At this time, the coating layer may include a layered aluminium-based compound and a titanium-based compound.

### Positive Electrode

In some embodiments, a positive electrode includes a positive electrode current collector and a positive electrode active material layer on the positive electrode current collector, wherein the positive electrode active material layer includes the positive electrode active material according to the present embodiments. The positive electrode active material layer may further include other types (kinds) of positive electrode active materials, in addition to the positive electrode active materials of the present embodiments. In some embodiments, the positive electrode active material layer may optionally further include a binder, a conductive material, or a combination thereof.

According to some embodiments, a loading level of the positive electrode active material layer may be about 10 mg/cm² to about 40 mg/cm², for example, about 10 mg/cm² to about 30 about mg/cm², or about 10 mg/cm² to about 20 mg/cm². In some embodiments, a density of the positive electrode active material layer in the final compressed positive electrode may be about 3.3 g/cc to about 3.7 g/cc, for example, about 3.3 g/cc to about 3.6 g/cc, or about 3.4 g/cc to about 3.58 g/cc. When applying the positive electrode active material according to some embodiments, it is advantageous to implement such a loading level and the density of the positive electrode active material layer, and a positive electrode that satisfies the loading level and the density of the positive electrode active material layer in the above ranges is suitable for implementing a high-capacity, high-energy-density rechargeable lithium battery.

### Binder

The binder improves binding properties of positive electrode active material particles with one another and with a current collector. Examples of binders may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, or nylon, but are not limited thereto.

### Conductive Material

The conductive material (e.g., electron conductor) is included to provide electrode conductivity and any suitable electrically conductive material may be used as a conductive material unless it causes a chemical change (e.g., an undesirable chemical change) in the battery. Examples of the conductive material may include a carbon-based material such as natural graphite, artificial graphite, carbon black, acetylene black, ketjen black, a carbon fiber, a carbon nanofiber, a carbon nanotube, and/or the like; a metal-based material of a metal powder and/or a metal fiber including copper, nickel, aluminium, silver, and/or the like; a conductive polymer such as a polyphenylene derivative; or a mixture thereof.

Each content (e.g., amount) of the binder and the conductive material may be about 0.5 wt% to about 5 wt% based on 100 wt% of the positive electrode active material layer.

The positive electrode current collector may include Al foil, but the present disclosure is not limited thereto.

### Rechargeable Lithium Battery

Some embodiments provide a rechargeable lithium battery including the positive electrode of the present embodiments, a negative electrode, and an electrolyte. As an example, the rechargeable lithium battery may include a positive electrode, a negative electrode, a separator between the positive electrode and the negative electrode, and an electrolyte.

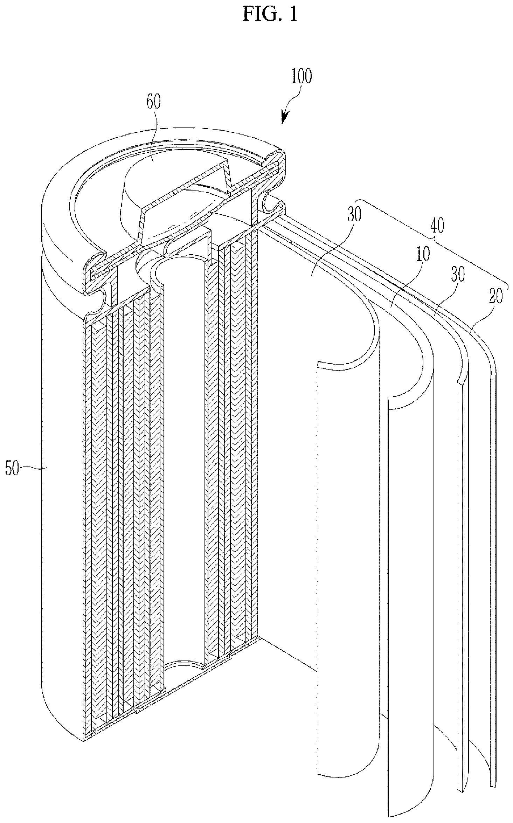

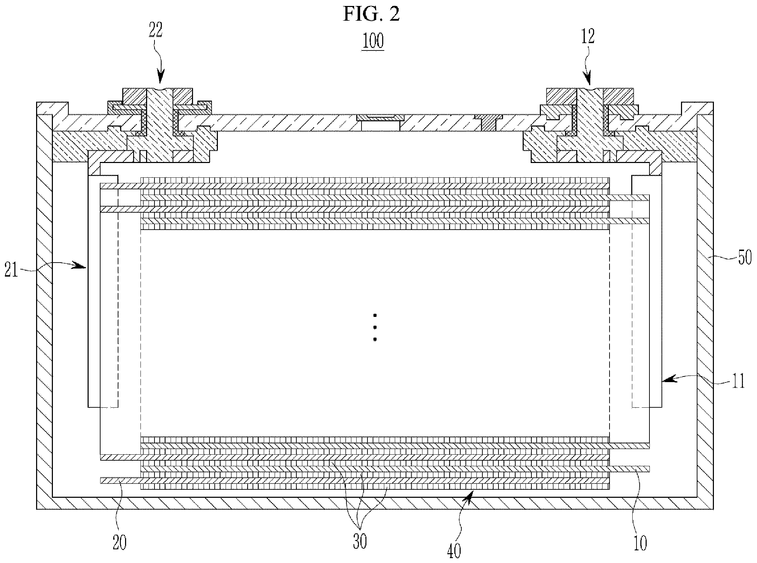

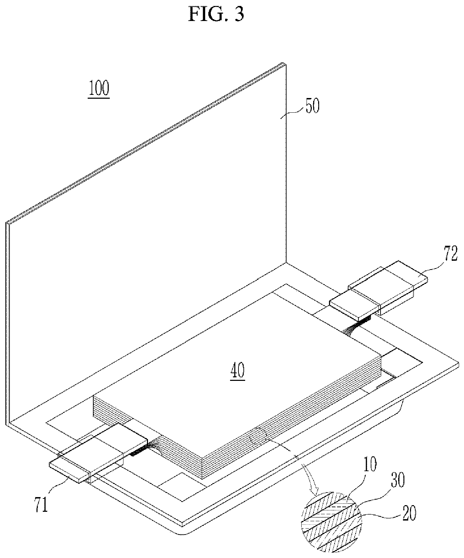

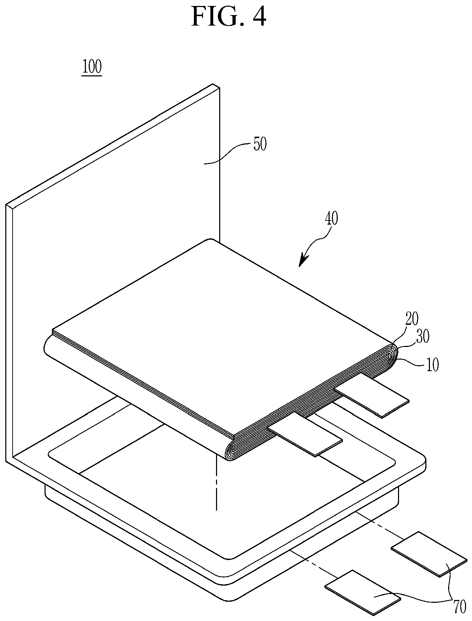

The rechargeable lithium battery may be classified into cylindrical, prismatic, pouch, coin, and/or the like depending on the shape. FIGs. 1 to 4 are schematic diagrams each showing the rechargeable lithium battery according to some embodiments, where FIG. 1 is of a cylindrical battery, FIG. 2 is of a prismatic battery, and FIGs. 3 and 4 are each of a pouch-shaped battery. Referring to FIGs. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte. The rechargeable lithium battery 100 may include a sealing member 60 that seals the case 50 as shown in FIG. 1. In some embodiments, in FIG. 2, the rechargeable lithium battery 100 may include a positive electrode lead tab 11, a positive electrode terminal 12, a negative lead tab 21, and a negative electrode terminal 22. As shown in FIGs. 3 and 4, the rechargeable lithium battery 100 includes an electrode tab 70, including, for example, a positive electrode tab 71 and a negative electrode tab 72 each serving as an electrical path for inducing the current formed in the electrode assembly 40 to the outside.

The rechargeable lithium battery according to some embodiments may be rechargeable at a high voltage (e.g., in high voltage conditions) and/or may be suitable for being driven at a high voltage. For example, the charging upper limit voltage of a rechargeable lithium battery may be greater than or equal to about 4.45 V, about 4.45 V to about 4.7 V, about 4.45 V to about 4.6 V, about 4.45 V to about 4.55 V, and/or the like. By applying the positive electrode active material according to some embodiments, the rechargeable lithium battery can significantly reduce an amount of gas generated even if (e.g., when) charged at high voltage and can achieve suitably high capacity and long cycle-life characteristics.

### Negative Electrode

The negative electrode may include a current collector and a negative electrode active material layer on the current collector, and may further include a negative electrode active material, a binder, a conductive material, or a combination thereof.

### Negative Electrode Active Material

The negative electrode active material may include a material that reversibly intercalates/deintercalates lithium ions, a lithium metal, a lithium metal alloy, a material capable of doping/dedoping lithium, and/or transition metal oxide.

The material that reversibly intercalates/deintercalates lithium ions may include, for example, crystalline carbon, amorphous carbon, or a combination thereof as a carbon-based negative electrode active material. The crystalline carbon may have an irregular shape, or may be sheet, flake, spherical, and/or fiber shaped natural graphite and/or artificial graphite. The amorphous carbon may be a soft carbon, a hard carbon, a mesophase pitch carbonization product, calcined coke, and/or the like.

The lithium metal alloy includes an alloy of lithium and a metal selected from among Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material and/or a Sn-based negative electrode active material. The Si-based negative electrode active material may include silicon, a silicon-carbon composite, SiOₓ (0 < x ≤ 2), a Si-Q alloy (wherein Q is an element selected from among an alkali metal, an alkaline-earth metal, a Group 13 element, a Group 14 element (excluding Si), a Group 15 element, a Group 16 element, a transition metal, a rare earth element, and a combination thereof, for example Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, TI, Ge, P, As, Sb, Bi, S, Se, Te, Po, and/or a combination thereof), or a combination thereof. The Sn-based negative electrode active material may be Sn, SnOₓ (0 < x ≤ 2) (e.g., SnO₂), a Sn alloy, or a combination thereof.

The silicon-carbon composite may be a composite of silicon and amorphous carbon. An average particle diameter (D₅₀) of the silicon-carbon composite particles may be, for example, about 0.5 µm to about 20 µm. According to some embodiments, the silicon-carbon composite may be in the form of silicon particles and amorphous carbon coated on the surface of the silicon particles. For example, it may include a secondary particle (core) in which silicon primary particles are assembled and an amorphous carbon coating layer (shell) on the surface of the secondary particle. The amorphous carbon may also be present between the silicon primary particles, for example, the silicon primary particles may be coated with amorphous carbon. The secondary particles may exist dispersed in an amorphous carbon matrix.

The silicon-carbon composite may further include crystalline carbon. For example, the silicon-carbon composite may include a core including crystalline carbon and silicon particles, and an amorphous carbon coating layer on the surface of the core. The crystalline carbon may be artificial graphite, natural graphite, or a combination thereof. The amorphous carbon may include soft carbon, hard carbon, a mesophase pitch carbonized product, and/or calcined coke.

When the silicon-carbon composite includes silicon and amorphous carbon, a content (e.g., amount) of silicon may be about 10 wt% to about 50 wt% and a content (e.g., amount) of amorphous carbon may be about 50 wt% to about 90 wt% based on 100 wt% of the silicon-carbon composite. In one or more embodiments, if (e.g., when) the composite includes silicon, amorphous carbon, and crystalline carbon, a content (e.g., amount) of silicon may be about 10 wt% to about 50 wt%, a content (e.g., amount) of crystalline carbon may be about 10 wt% to about 70 wt%, and a content (e.g., amount) of amorphous carbon may be about 20 wt% to about 40 wt% based on 100 wt% of the silicon-carbon composite.

In some embodiments, a thickness of the amorphous carbon coating layer may be about 5 nm to about 100 nm. An average particle diameter (D₅₀) of the silicon particles (primary particles) may be about 10 nm to about 1 µm, or about 10 nm to about 200 nm. The silicon particles may exist as silicon alone, in the form of a silicon alloy, and/or in an oxidized form. The oxidized form of silicon may be represented by SiOₓ (0<x≤2). At this time, the atomic content (e.g., amount) ratio of Si:O, which indicates a degree of oxidation, may be about 99:1 to about 33:67. As used herein, if (e.g., when) a definition is not otherwise provided, an average particle diameter (D₅₀) indicates a diameter of a particle where a cumulative volume is about 50 volume% in a particle size distribution.

The Si-based negative electrode active material and/or Sn-based negative electrode active material may be mixed with the carbon-based negative electrode active material. When the Si-based negative electrode active material and/or Sn-based negative electrode active material and the carbon-based negative electrode active material are mixed and used, the mixing ratio may be a weight ratio of about 1:99 to about 90:10.

### Binder

The binder serves to well or suitably adhere the negative electrode active material particles to each other and also to adhere the negative electrode active material to the current collector. The binder may be a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

If (e.g., when) an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, and/or Li.

The dry binder may be a polymer material capable of being fiberized, and may be, for example, polytetrafluoroethylene, polyvinylidene fluoride, a polyvinylidene fluoride-hexafluoropropylene copolymer, polyethylene oxide, or a combination thereof.

### Conductive Material

The conductive material is included to provide electrode conductivity and any suitable electrically conductive material may be used as a conductive material unless it causes a chemical change (e.g., an undesirable chemical change) in the battery. Examples of the conductive material include a carbon-based material such as natural graphite, artificial graphite, carbon black, acetylene black, ketjen black, a carbon fiber, a carbon nanofiber, a carbon nanotube, and/or the like; a metal-based material of a metal powder and/or a metal fiber including copper, nickel, aluminium, silver, and/or the like; a conductive polymer such as a polyphenylene derivative; or a mixture thereof.

A content (e.g., amount) of the negative electrode active material may be about 95 wt% to about 99.5 wt% based on 100 wt% of the negative electrode active material layer, and a content (e.g., amount) of the binder may be about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

### Current Collector

The negative electrode current collector may include, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), or an alloy thereof, and may be in the form of a foil, sheet, and/or foam. A thickness of the negative electrode current collector may be, for example, about 1 µm to about 20 µm, about 5 µm to about 15 µm , or about 7 µm to about 10 µm.

### Electrolyte

For example, the electrolyte for a rechargeable lithium battery may be an electrolyte, which may include a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, and/or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In one or more embodiments, the ketone-based solvent may include cyclohexanone, and/or the like. The alcohol-based solvent may include ethanol, isopropyl alcohol, and/or the like, and the aprotic solvent may include nitriles such as R-CN (wherein R is a C2 to C20 linear, branched, or cyclic hydrocarbon group, a double bond, an aromatic ring, an ether group, and/or the like); amides such as dimethylformamide; dioxolanes such as 1,3-dioxolane, 1,4-dioxolane, and/or the like; sulfolanes, and/or the like.

The non-aqueous organic solvent can be used alone or in a mixture of two or more types (kinds), and if (e.g., when) two or more types (kinds) are used in a mixture, a mixing ratio can be appropriately or suitably adjusted according to the desired or suitable battery performance.

When using a carbonate-based solvent, a cyclic carbonate and a chain carbonate may be mixed and used, and the cyclic carbonate and the chain carbonate may be mixed in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed and used in a volume ratio of about 1:1 to about 30:1.

The electrolyte may further include vinylethylene carbonate, vinylene carbonate, and/or an ethylene carbonate-based compound to improve battery cycle-life.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and/or cyanoethylene carbonate.

The lithium salt dissolved in the organic solvent supplies lithium ions in a battery, enables (e.g., facilitates) a basic operation of a rechargeable lithium battery, and improves transportation of the lithium ions between positive and negative electrodes. Examples of the lithium salt may include at least one selected from among LiPF₆, LiBF₄, LiSbF₆, LiAsF₆, LiClO₄, LiAlO₂, LiAlCl₄, LiPO₂F₂, LiCI, Lil, LiN(SO₃C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of about 0.1 M to about 2.0 M. When the concentration of lithium salt is within the above range, the electrolyte has appropriate or suitable ionic conductivity and viscosity, and thus excellent or suitable performance can be achieved and lithium ions can move effectively or suitably.

### Separator

Depending on the type or kind of the rechargeable lithium battery, a separator may be present between the positive electrode and the negative electrode. The separator may include polyethylene, polypropylene, polyvinylidene fluoride, or a multilayer film of two or more layers thereof, and may include, for example, a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, or a combination thereof on one or both surfaces (e.g., opposite surfaces) of the porous substrate.

The porous substrate may be a polymer film formed of any one (e.g., at least one) polymer selected from among polyolefin (such as polyethylene and/or polypropylene), polyester (such as polyethylene terephthalate and/or polybutylene terephthalate), polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, polytetrafluoroethylene (TEFLON), or a copolymer or mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide, and a second structural unit including at least one selected from among a structural unit derived from (meth)acrylic acid or (meth)acrylate, and a structural unit derived from (meth)acrylamidosulfonic acid and/or a salt thereof.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiOs, Mg(OH)₂, boehmite, and a combination thereof, but the present disclosure is not limited thereto. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked.

The thickness of the coating layer may be about 0.5 µm to about 20 µm, for example, about 1 µm to about 10 µm, or about 1 µm to about 5 µm.

Examples and comparative examples of the present disclosure are described in more detail below. However, the following examples are only examples of the present disclosure, and the present disclosure is not limited to the following examples.

### Example 1

### 1. Preparation of Positive Electrode Active Material

Ni_{0.75}Mn_{0.23}Al_{0.02}(OH)₂ and LiOH were mixed in a molar ratio of 1:1.05 and then, primarily heat-treated (e.g., subjected to a primary heat treatment) at 845 °C under an oxygen atmosphere for 8 hours to prepare a layered lithium nickel-manganese-based composite oxide in a form of secondary particles having a composition of Li_{1.05}Ni_{0.75}Mn_{0.23}Al_{0.02}O₂ and an average particle diameter (D₅₀) of about 14 µm.

A coating solution was prepared by adding aluminium sulfate and titanium sulfate with 600 g of distilled water to a 1 L reactor and then, stirring the mixture at about 350 rpm for about 5 minutes to dissolve the salts. As the salts were completely dissolved, the coating solution was confirmed to be colorless and transparent. Subsequently, 500 g of the layered lithium nickel-manganese-based composite oxide was added to the coating solution, which was being stirred, for 1.5 minutes and then, the stirring was continued for about 30 more minutes. Herein, the aluminium sulfate was designed to have an aluminium content (e.g., amount) of 0.875 mol% based on 100 mol% of a total metal excluding lithium in a final positive electrode active material, while the titanium sulfate was designed to have a titanium content (e.g., amount) of 0.125 mol% based on 100 mol% of the total metal excluding lithium in the final positive electrode active material. After completing the stirring, a supernatant thereof had pH 6.6.

After removing the solvent from the mixed solution by using an aspirator and filter press, a coated product was obtained through vacuum drying at 190 °C.

The coated product was secondarily heat-treated at 750 °C for 8 hours under an oxygen atmosphere to obtain the final positive electrode active material.

### 2. Manufacturing of Coin Cell

98.5 wt% of the positive electrode active material, 1.0 wt% of a polyvinylidene fluoride binder, and 0.5 wt% of a carbon nanotube conductive material were mixed to prepare positive electrode active material layer slurry, and the slurry was coated on an aluminium foil current collector and then, dried and compressed to manufacture a positive electrode. Herein, a loading level of the positive electrode active material layer was 10 mg/cm², and a density of the finally compressed positive electrode was about 3.4 g/cc.

Subsequently, the positive electrode was used with a lithium metal as a counter electrode and a polytetrafluoroethylene separator, and in addition, an electrolyte solution prepared by dissolving 1 M LiPF₆ in a mixed solvent of ethylene carbonate and dimethyl carbonate (volume ratio of the mixed solvent was 3:7) was used to manufacture a coin cell in a conventional manufacturing method.

### Example 2

A positive electrode active material and a coin cell were manufactured in substantially the same manner as in Example 1 except that the aluminium content (e.g., amount) of the aluminium sulfate was changed to 0.75 mol% based on 100 mol% of the total metal excluding lithium in the final positive electrode active material, and the titanium content (e.g., amount) of the titanium sulfate was changed to 0.25 mol% based on 100 mol% of the total metal excluding lithium in the final positive electrode active material.

### Comparative Example 1

A positive electrode active material and a coin cell were manufactured in substantially the same manner as in Example 1 except that the layered lithium nickel-manganese-based composite oxide by itself, without the Al and Ti coating, was used as the positive electrode active material.

### Comparative Example 2

A positive electrode active material and a coin cell were manufactured substantially in the same manner as in Example 1, except that the Al coating alone was performed (provided), without the Ti coating, by changing the aluminium content (e.g., amount) in the aluminium sulfate to 0.8 mol% based on 100 mol% of the total metal excluding lithium in the final positive electrode active material.

### Comparative Example 3

A positive electrode active material and a coin cell were manufactured substantially in the same manner as in Comparative Example 2, except that the aluminium content (e.g., amount) in the aluminium sulfate was changed to 1 mol%.

### Comparative Example 4

A positive electrode active material and a coin cell were manufactured substantially in the same manner as in Comparative Example 2 except that the aluminium content (e.g., amount) in the aluminium sulfate was changed to 1.2 mol%.

### Comparative Example 5

A positive electrode active material and a coin cell were manufactured substantially in the same manner as in Comparative Example 2, except that the aluminium content (e.g., amount) in the aluminium sulfate was changed to 1.5 mol%.

### Comparative Example 6

A positive electrode active material and a coin cell were manufactured substantially in the same manner as in Example 1, except that the Ti coating was performed without the Al coating, wherein the titanium content (e.g., amount) in the titanium raw material was changed to 0.25 mol% based on 100 mol% of the total metal excluding lithium in the final positive electrode active material.

### Comparative Example 7

A positive electrode active material and a coin cell were manufactured substantially in the same manner as in Comparative Example 6, except that the titanium content (e.g., amount) in the titanium raw material was changed to 0.5 mol% based on 100 mol% of the total metal excluding lithium in the final positive electrode active material.

### Comparative Example 8

A positive electrode active material and a coin cell were manufactured substantially in the same manner as in Comparative Example 6, except that the titanium content (e.g., amount) in the titanium raw material was changed to 1.0 mol% based on 100 mol% of the total metal excluding lithium in the final positive electrode active material.

### Comparative Example 9

A positive electrode active material and a coin cell were manufactured substantially in the same manner as in Example 1, except that the aluminium content (e.g., amount) of the aluminium sulfate was changed to 0.5 mol% based on 100 mol% of the total metal excluding lithium in the final positive electrode active material, and the titanium content (e.g., amount) of the titanium sulfate was changed to 0.5 mol% based on 100 mol% of the total metal excluding lithium in the final positive electrode active material.

### Evaluation Example 1: SEM Analysis

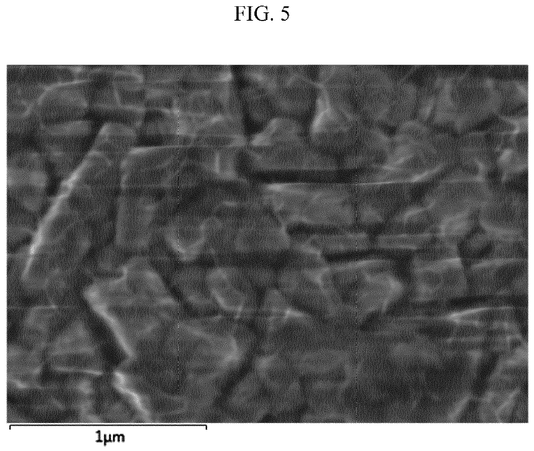

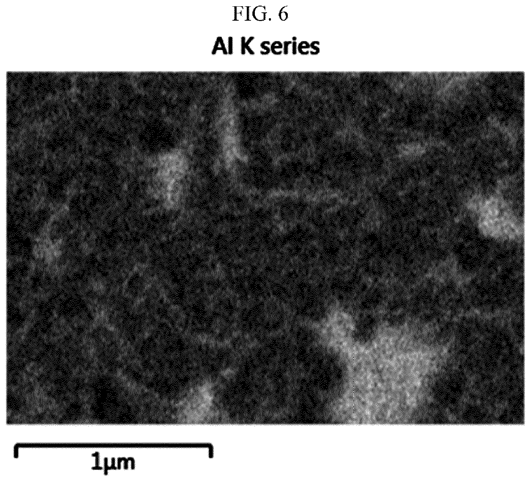

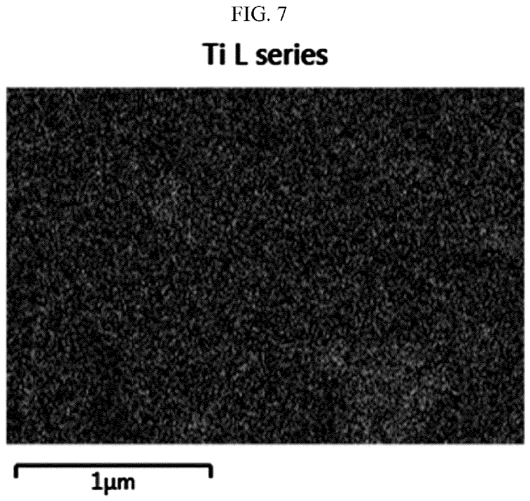

FIG. 5 is an SEM image of the surface of the coated product prepared in Example 1, FIG. 6 is an EDS analysis image highlighting the Al element in FIG. 5, and FIG. 7 is an EDS analysis image highlighting the Ti element in FIG. 5. In FIG. 5, it can be seen that a coating layer was formed with a spiderweb shape on the secondary particle surface, in FIG. 6, it can be seen that Al was detected in a similar distribution to this spiderweb shape, and in FIG. 7, it can be seen that Ti was detected in a portion of the Al distribution region.

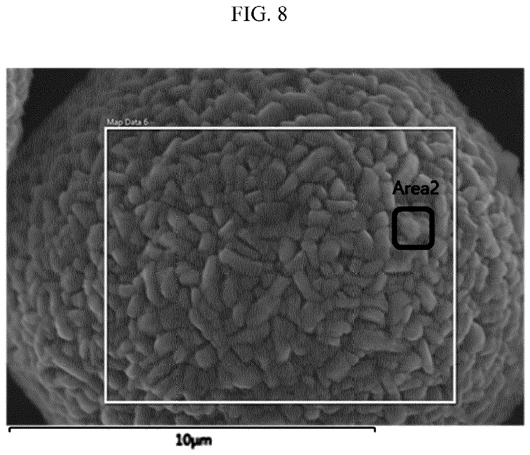

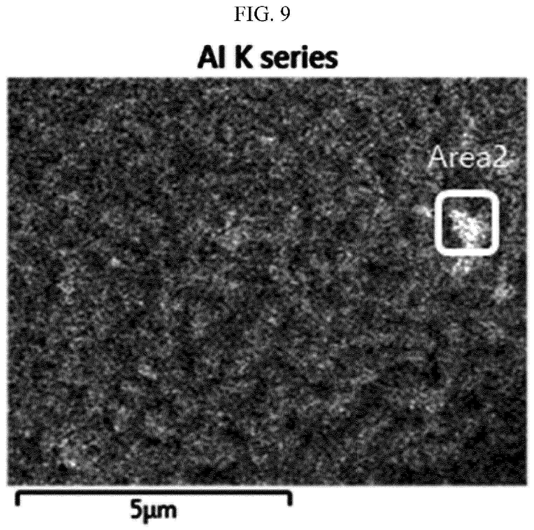

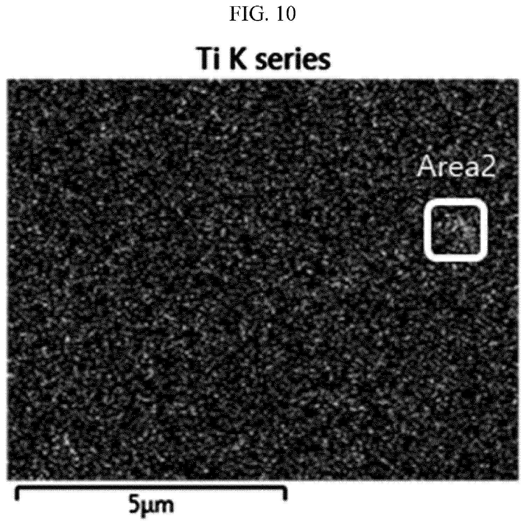

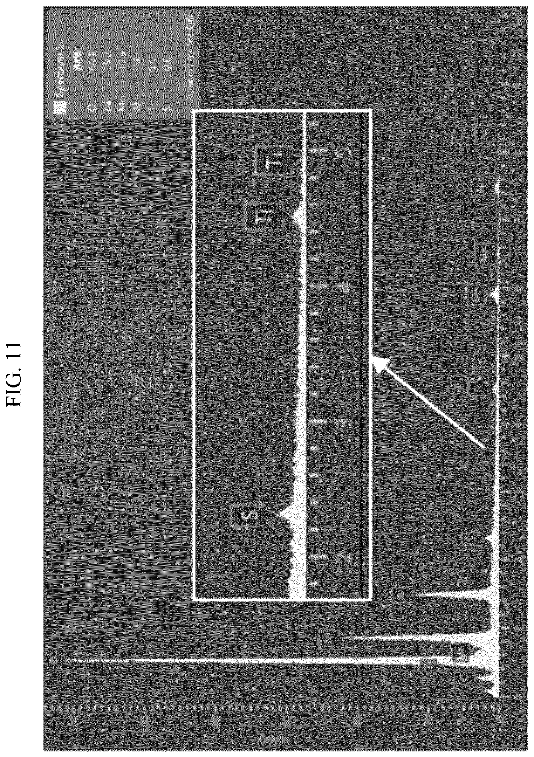

FIG. 8 is an SEM image of the surface of the coated product prepared in Example 1, FIG. 9 is an EDS analysis image highlighting the Al element in the white square area of Figure 8, and FIG. 10 is an EDS analysis image highlighting the Ti element in the white square area of FIG. 8. FIG. 11 is an EDS analysis graph of Area 2 marked in FIGs. 8 to 10. Referring to FIG. 11, an Al peak and a Ti peak were detected on the secondary particle surface.

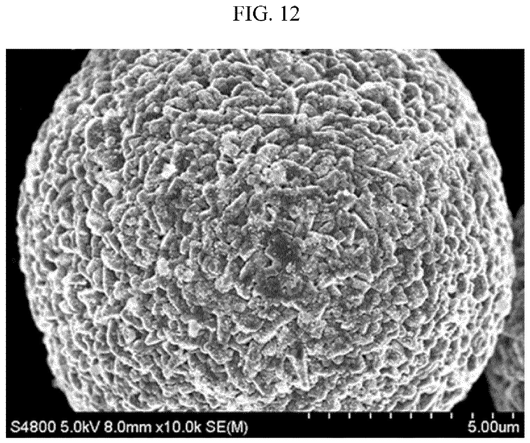

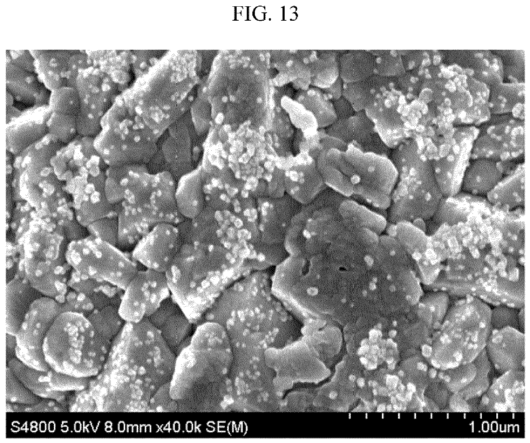

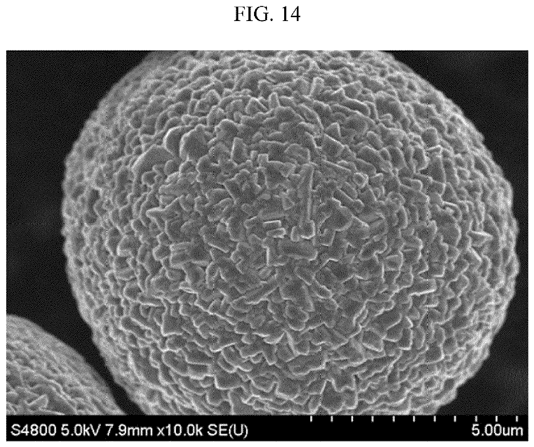

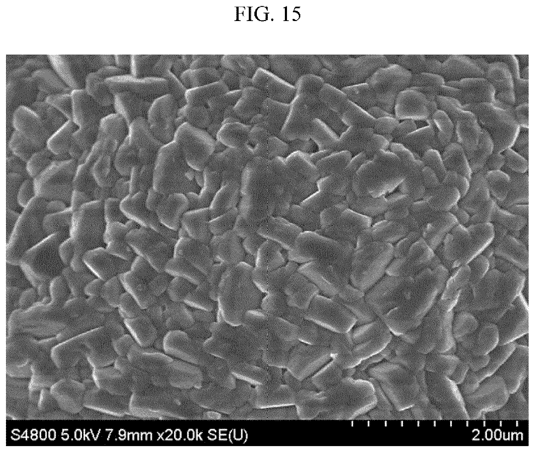

FIG. 12 is an SEM image of the surface of the final positive electrode active material prepared in Example 1, and FIG. 13 is an enlarged image thereof. FIG. 14 is an SEM image of the surface of the final positive electrode active material prepared in Comparative Example 1, and FIG. 15 is an enlarged image thereof. Compared to Example 1 of FIGs. 12 and 13, Comparative Example 1 of FIGs. 14 and 15 exhibited a smooth secondary particle surface, however, Example 1 of FIGs. 12 and 13 exhibited an Al coating layer found on the secondary particle surface.

### Evaluation Example 2: XPS Analysis

An XPS analysis was performed by using ESCALAB 250Xi equipment made by Thermo Fisher Scientific under the following analysis conditions.
- X-ray: Al Ka 1486.6 eV
- Charge neutralization: Low energy ion & electron
- Ar⁺ Gun: 4000 eV
- Ar⁺ Monatomic Gun

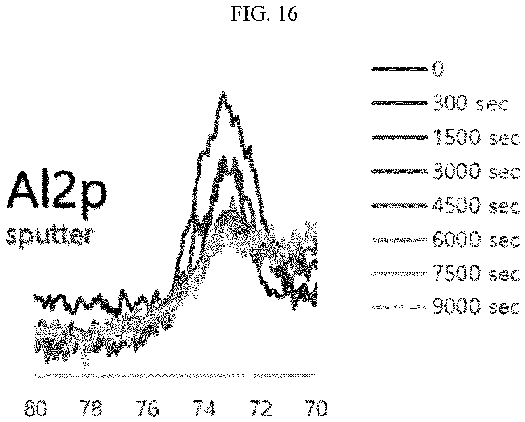

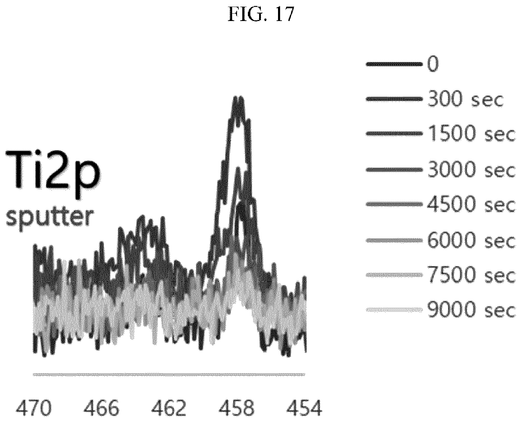

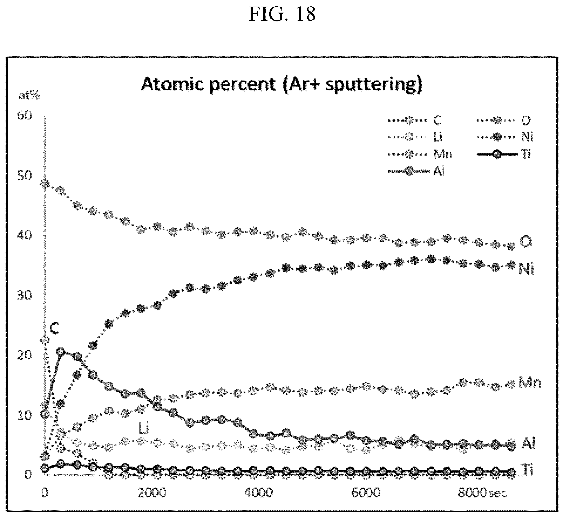

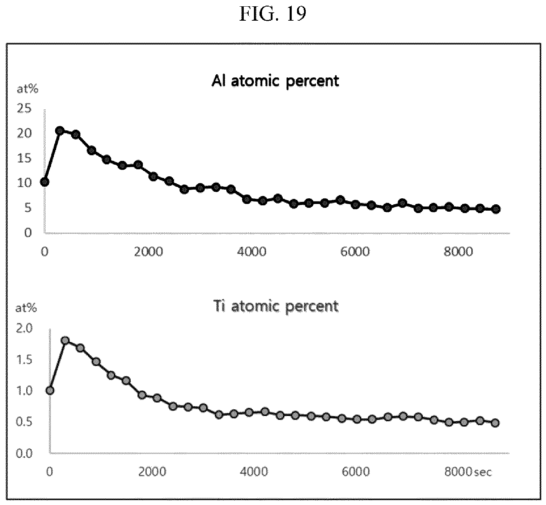

As an XPS analysis result of the surface of the final positive electrode active material of Example 1, an Al component was detected, as shown in FIG. 16, and a Ti component was detected, as shown in FIG. 17. In addition, an XPS depth profile of the final positive electrode active material of Example 1 was analyzed, and the results are shown in FIG. 18, and in FIG. 19, an Al element profile and a Ti element profile are shown.

Referring to FIGs. 18 and 19, it can be concluded, without being bound by any particular theory, that Al and Ti existed on the positive electrode active material secondary particle surface, but the Al and Ti contents decreased from the surface toward the inside, wherein graphs of Al and Ti contents had a similar decreasing shape (e.g., graphs showing decreasing Al content and decreasing Ti content had similar shapes). In one or more embodiments, on the positive electrode active material secondary particle surface, the Al content (e.g., amount) was about 5 atomic percent (at%) to 20 at%, and the Ti content (e.g., amount) was about 0.5 at% to 2 at% based on 100 at% of a total element on a surface of the positive electrode active material.

### Evaluation Example 3: Evaluation of Initial charge/Discharge Capacity and Efficiency of Battery and High-Temperature Cycle-life Characteristics

The coin cells of Examples 1 and 2 and Comparative Examples 1 to 9 were charged to an upper limit voltage of 4.45 V at a constant current of 0.2 C and to 0.05 C at a constant voltage and then, discharged to a cut-off voltage of 3.0 V at 0.2 C at 25 °C for initial charge and discharge. In Table 1, initial charge capacity, initial discharge capacity, and a ratio of the initial discharge capacity to the initial charge capacity as efficiency are provided.

Subsequently, the cells were 50 times or more repeatedly charged and discharged at 1.0 C within a voltage range of 3.0 V to 4.45 V at 45 °C to calculate a ratio of 50^{th} cycle discharge capacity to the initial discharge capacity, which is shown as high temperature cycle-life in Table 1.

**Table 1**

| | Al coating (mol%) | Ti coating (mol%) | 0.2 C charge (mAh/g) | 0.2 C discharge (mAh/g) | Efficie ncy (%) | High-temperature Cycle-life (%, 45 °C, 50cyc) |
|---|---|---|---|---|---|---|
| Example 1 | 0.875 | 0.125 | 230.7 | 197.5 | 85.6 | 96.3 |
| Example 2 | 0.75 | 0.25 | 230.4 | 194.4 | 84.4 | 96.2 |
| Comparative Example 1 | - | - | 229.6 | 194.9 | 84.9 | 91.3 |
| Comparative Example 2 | 0.8 | - | 229.8 | 195.4 | 85.0 | 92.2 |
| Comparative Example 3 | 1.0 | - | 229.4 | 194.4 | 84.7 | 94.3 |
| Comparative Example 4 | 1.2 | - | 229.0 | 193.0 | 84.3 | 87.7 |
| Comparative Example 5 | 1.5 | - | 227.5 | 194.0 | 85.3 | 88.8 |
| Comparative Example 6 | - | 0.25 | 229.4 | 184.4 | 80.4 | 97.5 |
| Comparative Example 7 | - | 0.5 | 230.1 | 185.5 | 80.6 | 96.0 |
| Comparative Example 8 | - | 1.0 | 227.2 | 188.5 | 83.0 | 82.9 |
| Comparative Example 9 | 0.5 | 0.5 | 229.6 | 191.2 | 83.3 | 90.5 |

Referring to Table 1, Examples 1 and 2 each concurrently (e.g., simultaneously) realized suitably high (or improved) initial charge and discharge capacity, suitably high (or improved) initial charging and discharging efficiency, and excellent or improved high-temperature cycle-life characteristics as compared with the comparative examples. That is, Example 1, compared with Comparative Example 3 in which 1 mol% of Al alone was coated, exhibited improved initial discharge capacity, initial charging and discharging efficiency, and high-temperature cycle-life characteristics, and Example 2, compared with Comparative Example 3, exhibited significantly improved high-temperature cycle-life characteristics.

Comparative Example 1, into which the Al and Ti coating layer was not introduced, exhibited inferior high-temperature cycle-life characteristics compared to the example embodiments, and Comparative Examples 2 and 3, in which Al alone was respectively coated in an amount of 0.8 mol% and in an amount of 1 mol%, each exhibited a little (e.g., slightly) deteriorated high-temperature cycle-life characteristics. Comparative Examples 4 and 5, in which Al alone was respectively coated in an amount of 1.2 mol% and in an amount of 1.5 mol%, each exhibited significantly deteriorated high-temperature cycle-life characteristics. Comparative Examples 6 to 8, in which Ti alone was coated without the Al coating, each exhibited significantly lower initial discharge capacity and initial charging and discharging efficiency compared to the Examples, and Comparative Example 8, in which Ti alone was coated in an amount of 1 mol%, exhibited significantly deteriorated high-temperature cycle-life characteristics. Further, Comparative Example 9, in which a ratio of the Al coating content (e.g., amount) to the Ti coating content (e.g., amount) was 1, exhibited slightly deteriorated initial discharge capacity, initial charging and discharging efficiency, and high-temperature cycle-life characteristics, while the example embodiments (i.e., the Examples), in each of which the ratio (AI:Ti) was 2 or more, each exhibited significantly improved battery performance.

While this disclosure has been described in connection with what is presently considered to be example embodiments, it is to be understood that the present disclosure is not limited to the disclosed embodiments. In contrast, it is intended to cover one or more suitable modifications and equivalent arrangements included within the scope of the appended claims and their equivalents.

**Reference Numerals**

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

Embodiments are set out in the following clauses:
1. A positive electrode active material, comprising:
   a plurality of core particles comprising a layered lithium nickel-manganese-based composite oxide having a nickel content of greater than or equal to 60 mol% based on 100 mol% of total metals in the lithium nickel-manganese-based composite oxide excluding lithium, and
   a coating layer on a surface of each of the plurality of core particles, the coating layer comprising aluminium (Al) and titanium (Ti).
Clause 2. The positive electrode active material of clause 1, wherein
   on a surface of the positive electrode active material, a ratio (Al/Ti) of Al content to Ti content is greater than or equal to 2.
Clause 3. The positive electrode active material of clause 1 or clause 2, wherein
   an Al content is 5 at% to 35 at%, and a Ti content is 0.1 at% to 3.0 at%, based on 100 at% of a total element composition on a surface of the positive electrode active material, as measured through X-ray photoelectron spectroscopy.
Clause 4. The positive electrode active material of any one of clauses 1 to 3, wherein
   an Al content is 5 at% to 25 at%, and a Ti content is 0.5 at% to 2.0 at%, based on 100 at% of a total element composition on a surface of the positive electrode active material, as measured through X-ray photoelectron spectroscopy.
Clause 5. The positive electrode active material of any one of clauses 1 to 4, wherein
   an Al content of the coating layer is 0.1 mol% to 3.0 mol%, and a Ti content is 0.01 mol% to 1.5 mol%, based on 100 mol% of a total metal composition excluding lithium in the positive electrode active material.
Clause 6. The positive electrode active material of any one of clauses 1 to 4, wherein
   an Al content of the coating layer is 0.5 mol% to 1.5 mol%, and a Ti content is 0.1 mol% to 1.0 mol%, based on 100 mol% of a total metal composition excluding lithium in the positive electrode active material.
Clause 7. The positive electrode active material of any one of clauses 1 to 6, wherein
   a total amount of Al and Ti in the coating layer is 0.5 mol% to 1.5 mol%, based on 100 mol% of a total metal composition excluding lithium in the positive electrode active material.
Clause 8. The positive electrode active material of any one of clauses 1 to 7, wherein
   the coating layer is in a form of a shell that is to continuously surround the surface of each of the plurality of core particles.
Clause 9. The positive electrode active material of any one of clauses 1 to 8, wherein
   a thickness of the coating layer is 5 nm to 200 nm.
Clause 10. The positive electrode active material of any one of clauses 1 to 9, wherein the positive electrode active material is in a form of a plurality of positive electrode active material particles and a deviation of a thickness of the coating layer within a positive electrode active material particle of the plurality of positive electrode active material particles is less than or equal to 20%.
Clause 11. The positive electrode active material of any one of clauses 1 to 10, wherein
   the coating layer comprises a layered aluminium compound.
Clause 12. The positive electrode active material of any one of clauses 1 to 11, wherein
   the coating layer further comprises nickel, manganese, or a combination thereof.
Clause 13. The positive electrode active material of any one of clauses 1 to 12, wherein
   in the layered lithium nickel-manganese-based composite oxide of the plurality of core particles, the nickel content is 60 mol% to 80 mol%, and a manganese content is greater than or equal to 15 mol%, based on 100 mol% of a total metal composition of the lithium nickel-manganese-based composite oxide excluding lithium.
Clause 14. The positive electrode active material of any one of clauses 1 to 13, wherein
   the layered lithium nickel-manganese-based composite oxide of the plurality of core particles further comprises aluminium, and an aluminium content in the plurality of core particles is 1 mol% to 3 mol% based on 100 mol% of a total metal composition of the lithium nickel-manganese-based composite oxide excluding lithium.
Clause 15. The positive electrode active material of any one of clauses 1 to 14, wherein
   a concentration of aluminium in the plurality of core particles is substantially uniform.
Clause 16. The positive electrode active material of any one of clauses 1 to 15, wherein
   in the layered lithium nickel-manganese-based composite oxide of the plurality of core particles, a content of cobalt is 0 mol% to 0.01 mol% based on 100 mol% of a total metal composition of the lithium nickel-manganese-based composite oxide excluding lithium.
Clause 17. The positive electrode active material of any one of clauses 1 to 16, wherein
   the layered lithium nickel-manganese-based composite oxide of the plurality of core particles is represented by Chemical Formula 1:

      Chemical Formula 1 Liₐ₁Niₓ₁Mn_{y1}Al_{z1}M¹_{w1}O_{2-b1}X_{b1},
   in Chemical Formula 1,
   0.9≤a1≤1.8, 0.6≤x1≤0.8, 0.1≤y1≤0.4, 0≤z1≤0.03, 0≤w1≤0.3, 0.9≤x1+y1+z1+w1≤1.1, and 0≤b1≤0.1,
   M¹ is one or more selected from among B, Ba, Ca, Ce, Cr, Fe, Mg, Mo, Nb, Si, Sn, Sr, Ti, V, W, Y, and Zr, and
   X is one or more selected from among F, P and S.
Clause 18. The positive electrode active material of any one of clauses 1 to 17, wherein
   each of the plurality of core particles is in a form of a secondary particle formed by agglomerating a plurality of primary particles, and
   an average particle diameter (D₅₀) of the positive electrode active material in a form of a plurality of positive electrode active material particles is 10 µm to 25 µm, the plurality of positive electrode active material particles comprising the plurality of core particles and the coating layer on the surface of each of the plurality of core particles.
Clause 19. A method of preparing a positive electrode active material, the method comprising:
   preparing a plurality of core particles comprising a layered lithium nickel-manganese-based composite oxide having a nickel content of greater than or equal to 60 mol% based on 100 mol% of a total metal composition of the lithium nickel-manganese-based composite oxide excluding lithium,
   adding and mixing an aluminium raw material and a titanium raw material to an aqueous solvent to prepare a coating solution,
   adding and mixing the plurality of core particles to the coating solution to prepare a mixed solution, and
   removing the aqueous solvent from the mixed solution, drying a resulting product, and performing heat treatment to obtain a positive electrode active material.
Clause 20. The method of clause 19, wherein
   in the layered lithium nickel-manganese-based composite oxide, the nickel content is 60 mol% to 80 mol%, a manganese content is greater than or equal to 15 mol%, an aluminium content is 0 mol% to 3 mol%, and a cobalt content is 0 mol% to 0.01 mol%, based on 100 mol% of a total metal composition of the lithium nickel-manganese-based composite oxide excluding lithium.
Clause 21. The method of clause 19 or clause 20, wherein
   the aluminium raw material is aluminium sulfate, and
   the titanium raw material is titanium sulfate, titanium nitrate, or a combination thereof.
Clause 22. The method of any one of clauses 19 to 21, wherein
   an aluminium content of the aluminium raw material is 0.1 mol% to 3.0 mol%, and a titanium content of the titanium raw material is 0.01 mol% to 1.5 mol%, based on 100 mol% of a total of metal composition excluding lithium in the plurality of core particles, aluminium of the aluminium raw material, and titanium of the titanium raw material.
Clause 23. The method of any one of clauses 19 to 22, wherein
   the adding and mixing of the aluminium raw material and the titanium raw material to the aqueous solvent are performed for 1 minute to 30 minutes at 100 rpm to 800 rpm.
Clause 24. The method of any one of clauses 19 to 23, wherein
   the adding of the plurality of core particles to the coating solution is performed at 30 seconds/500 g to 2 minutes/500 g,
   the mixing of the plurality of core particles with the coating solution after the adding of the plurality of core particles is performed for 15 minutes to 60 minutes, and
   after completing the mixing of the plurality of core particles with the coating solution, a supernatant thereof has pH 5.5 to 8.5.
Clause 25. The method of any one of clauses 19 to 24, wherein
   after removing the aqueous solvent from the mixed solution, the resulting product therefrom is dried at 40 °C to 240 °C under a vacuum state.
Clause 26. The method of any one of clauses 19 to 25, wherein
   after removing the aqueous solvent from the mixed solution, and drying the resulting product, the dried resulting product comprises the plurality of core particles and a coating layer on a surface of the plurality of core particles and comprising Al and Ti, wherein the coating layer has a spiderweb shape.
Clause 27. The method of any one of clauses 19 to 26, wherein
   the heat treatment is performed within a temperature range of 730 °C to 800 °C.
Clause 28. A positive electrode, comprising:
   a positive electrode current collector, and
   a positive electrode active material layer on the positive electrode current collector,
   wherein the positive electrode active material layer comprises the positive electrode active material of any one of clauses 1 to 18.
Clause 29. The positive electrode of clause 28, wherein
   the positive electrode active material layer has a loading level of 10 mg/cm² to 40 mg/cm².
Clause 30. The positive electrode of clause 28 or clause 29, wherein
   the positive electrode active material layer has density of 3.3 g/cc to 3.7 g/cc.
Clause 31. A rechargeable lithium battery, comprising:
   the positive electrode of any one of clauses 28 to 30,
   a negative electrode, and
   an electrolyte.
Clause 32. The rechargeable lithium battery of clause 31, wherein
   a charging voltage of the rechargeable lithium battery is greater than or equal to 4.45 V.

## Claims

1. A positive electrode active material, comprising:
a plurality of core particles comprising a layered lithium nickel-manganese-based composite oxide having a nickel content of greater than or equal to 60 mol% based on 100 mol% of a total metal excluding lithium in the layered lithium nickel-manganese-based composite oxide, and
a coating layer on a surface of each of the plurality of core particles, the coating layer comprising aluminium (Al) and titanium (Ti).

2. The positive electrode active material as claimed in claim 1, wherein:
(i) on a surface of the positive electrode active material, a ratio (Al/Ti) of Al content to Ti content is greater than or equal to 2; and/or
(ii) an Al content is 5 at% to 35 at%, and a Ti content is 0.1 at% to 3.0 at%, based on 100 at% of a total element on a surface of the positive electrode active material, as measured through X-ray photoelectron spectroscopy; and/or
(iii) an Al content is 5 at% to 25 at%, and a Ti content is 0.5 at% to 2.0 at%, based on 100 at% of a total element on a surface of the positive electrode active material, as measured through X-ray photoelectron spectroscopy.

3. The positive electrode active material as claimed in claim 1 or claim 2, wherein:
(i) an Al content of the coating layer is 0.1 mol% to 3.0 mol%, and a Ti content is 0.01 mol% to 1.5 mol%, based on 100 mol% of a total metal excluding lithium in the positive electrode active material; or
(ii) an Al content of the coating layer is 0.5 mol% to 1.5 mol%, and a Ti content is 0.1 mol% to 1.0 mol%, based on 100 mol% of a total metal excluding lithium in the positive electrode active material.

4. The positive electrode active material as claimed in any one of claims 1 to 3, wherein
a total amount of Al and Ti in the coating layer is 0.5 mol% to 1.5 mol%, based on 100 mol% of a total metal excluding lithium in the positive electrode active material.

5. The positive electrode active material as claimed in any one of claims 1 to 4, wherein:
(i) the coating layer is in a form of a shell that continuously surrounds the surface of each of the plurality of core particles; and/or
(ii) a thickness of the coating layer is 5 nm to 200 nm; and/or
(iii) the positive electrode active material is in a form of a plurality of positive electrode active material particles and a deviation of a thickness of the coating layer within a positive electrode active material particle of the plurality of positive electrode active material particles is less than or equal to 20%.

6. The positive electrode active material as claimed in any one of claims 1 to 5, wherein:
(i) the coating layer comprises a layered aluminium compound; and/or
(ii) the coating layer further comprises nickel, manganese, or a combination thereof.

7. The positive electrode active material as claimed in any one of claims 1 to 6, wherein:
(i) in the layered lithium nickel-manganese-based composite oxide of the plurality of core particles, the nickel content is 60 mol% to 80 mol%, and a manganese content is greater than or equal to 10 mol%, based on 100 mol% of a total metal excluding lithium in the layered lithium nickel-manganese-based composite oxide; and/or
(ii) the layered lithium nickel-manganese-based composite oxide of the plurality of core particles further comprises aluminium, and an aluminium content in the plurality of core particles is greater than 0 mol% and less or equal to 3 mol% based on 100 mol% of a total metal excluding lithium in the lithium nickel-manganese-based composite oxide, optionally wherein
a concentration of aluminium in the plurality of core particles is substantially uniform.

8. The positive electrode active material as claimed in any one of claims 1 to 7, wherein:
(i) in the layered lithium nickel-manganese-based composite oxide of the plurality of core particles, a content of cobalt is 0 mol% to 0.01 mol% based on 100 mol% of a total metal excluding lithium in the layered lithium nickel-manganese-based composite oxide; and/or
(ii) the layered lithium nickel-manganese-based composite oxide of the plurality of core particles is represented by Chemical Formula 1:
Chemical Formula 1 Liₐ₁Niₓ₁Mn_{y1}Al_{z1}M¹_{w1}O_{2-b1}X_{b1},
in Chemical Formula 1,
0.9≤a1≤1.8, 0.6≤x1≤0.8, 0.1≤y1≤0.4, 0≤z1≤0.03, 0≤w1≤0.3, 0.9≤x1+y1+z1+w1≤1.1, and 0≤b1≤0.1,
M¹ is one or more selected from among B, Ba, Ca, Ce, Cr, Fe, Mg, Mo, Nb, Si, Sn, Sr, Ti, V, W, Y, and Zr, and
X is one or more selected from among F, P and S.

9. The positive electrode active material as claimed in any one of claims 1 to 8, wherein
each of the plurality of core particles is in a form of a secondary particle formed by agglomerating a plurality of primary particles, and
an average particle diameter (D₅₀) of the positive electrode active material in a form of a plurality of positive electrode active material particles is 10 µm to 25 µm, the plurality of positive electrode active material particles comprising the plurality of core particles and the coating layer on the surface of each of the plurality of core particles.

10. A method of preparing a positive electrode active material, the method comprising:
preparing a plurality of core particles comprising a layered lithium nickel-manganese-based composite oxide having a nickel content of greater than or equal to 60 mol% based on 100 mol% of a total metal excluding lithium in the layered lithium nickel-manganese-based composite oxide,
adding and mixing an aluminium raw material and a titanium raw material to an aqueous solvent to prepare a coating solution,
adding and mixing the plurality of core particles to the coating solution to prepare a mixed solution, and
removing the aqueous solvent from the mixed solution, drying a resulting product, and performing heat treatment to obtain a positive electrode active material.

11. The method as claimed in claim 10, wherein:
(i) in the layered lithium nickel-manganese-based composite oxide, the nickel content is 60 mol% to 80 mol%, a manganese content is greater than or equal to 15 mol%, an aluminium content is 0 mol% to 3 mol%, and a cobalt content is 0 mol% to 0.01 mol%, based on 100 mol% of a total metal excluding lithium in the layered lithium nickel-manganese-based composite oxide; and/or
(ii) the aluminium raw material is aluminium sulfate, and
the titanium raw material is titanium sulfate, titanium nitrate, or a combination thereof; and/or
(iii) an aluminium content of the aluminium raw material is 0.1 mol% to 3.0 mol%, and a titanium content of the titanium raw material is 0.01 mol% to 1.5 mol%, based on 100 mol% of a total metal excluding lithium in the positive electrode active material; and/or
(iv) the adding and mixing of the aluminium raw material and the titanium raw material to the aqueous solvent are performed for 1 minute to 60 minutes at 100 rpm to 800 rpm.

12. The method as claimed in claim 10 or claim 11, wherein:
(i) the adding of the plurality of core particles to the coating solution is performed at 30 seconds/500 g to 2 minutes/500 g,
the mixing of the plurality of core particles with the coating solution after the adding of the plurality of core particles is performed for 15 minutes to 60 minutes, and
after completing the mixing of the plurality of core particles with the coating solution, a supernatant thereof has pH 5.5 to 8.5; and/or
(ii) after removing the aqueous solvent from the mixed solution, the resulting product therefrom is dried at 40 °C to 240 °C under a vacuum state; and
(iii) after removing the aqueous solvent from the mixed solution, and drying the resulting product, the dried resulting product comprises the plurality of core particles and a coating layer on a surface of each of the plurality of core particles and comprising Al and Ti, wherein the coating layer has a spiderweb shape; and/or
(iv) the heat treatment is performed within a temperature range of 730 °C to 800 °C.

13. A positive electrode, comprising:
a positive electrode current collector, and
a positive electrode active material layer on the positive electrode current collector,
wherein the positive electrode active material layer comprises the positive electrode active material as claimed in any one of claims 1 to 9.

14. The positive electrode as claimed in claim 13, wherein:
(i) the positive electrode active material layer has a loading level of 10 mg/cm² to 40 mg/cm²; and/or
(ii) the positive electrode active material layer has density of 3.3 g/cc to 3.7 g/cc.

15. A rechargeable lithium battery, comprising:
the positive electrode as claimed in claim 13 or claim 14,
a negative electrode, and
an electrolyte, optionally wherein
a charging upper limit voltage of the rechargeable lithium battery is greater than or equal to 4.45 V.
